# EUROPÄISCHE PATENTSCHRIFT

(11) **EP 1 036 509 B1**
(45) Veröffentlichungstag und Bekanntmachung des Hinweises auf die Patenterteilung: **17.09.2003**
(21) Anmeldenummer: 00810144.6
(22) Anmeldetag: 21.02.2000
(51) Int. Cl.: A23L 1/216

(54) **Protein angereicherter Kartoffelteig**
Potato dough enriched in protein
Pâte de pomme de terre enrichie en protéine

(30) Priorität: 16.03.1999 CH 48299
(43) Veröffentlichungstag der Anmeldung: 20.09.2000
(73) Patentinhaber: Meli, Anton, 7323 Wangs (CH); Meli- Cabalzar, Brigitta, 7323 Wangs (CH)
(72) Erfinder: Meli, Anton, 7323 Wangs (CH); Meli- Cabalzar, Brigitta, 7323 Wangs (CH)
(74) Vertreter: Riederer, Conrad A., Dr.

(56) Entgegenhaltungen:
- EP-A- 0 296 039
- FR-A- 2 018 501
- FR-A- 2 432 842
- GB-A- 2 245 138
- GB-A- 2 290 216
- DATABASE WPI Section Ch, Week 8333 Derwent Publications Ltd., London, GB; Class D13, AN 83-738620 XP002116210 & JP 58 116665 A (SHIMAKURA E), 11. Juli 1983 (1983-07-11)
- DATABASE WPI Section Ch, Week 7901 Derwent Publications Ltd., London, GB; Class D13, AN 79-01084B XP002116211 & JP 53 133657 A (NISSHIN OIL MILLS LTD), 21. November 1978 (1978-11-21)

## Beschreibung

Die Erfindung betrifft eine Verwendung eines Kartoffelteigs, Kartoffelteigwaren, einen Kartoffelteig und ein Verfahren zur Herstellung von Kartoffelteigwaren gemäss den Oberbegriffen der Ansprüche 1, 3, 5, und 12.

"Schlutzkrapfen" wird eine Südtiroler Spezialität genannt, weiche wie Ravioli, Agnolotti, Tortelli, Tortelloni oder Tortellini aus einer gefüllten Teigtasche besteht. Die verschiedenen Namen weisen auf unterschiedliche Formen von Teigtaschen hin. Für den Schlutzkrapfenteig wird einheitlich folgendes Rezept angegeben: 150 g Weizenmehl Type 405 oder 550,100 g Roggenmehl Type 997, ½ Teelöffel Salz, 1 Ei, 1 bis 2 Teelöffel Öl, etwa 75 ml Wasser.

Als ein Markenzeichen der Pustertaler Küche werden im Buch "Südtiroler Bäuerinnen kochen" von Karin Longariva, Edition Löwenzahn, "Eräpfelschlutzkrapflan" genannt. Der für diese Kartoffelschlutzkrapfen verwendete Kartoffelteig ist dem Gnocchi-Teig verwandt. Nach "Pauli, Lehrbuch der Küche", wird ein Kartoffel-Gnocchi-Teig aus 1,2 kg Kartoffeln (ca. 77%),150 g aufgeschlagenen Eiern (ca. 10%) und ca. 200 g Mehl (ca. 13%) hergestellt. Dieser Teig wird rnit Salz, Pfeffer und Muskat gewürzt. Die Kartoffeln müssen in der Schale gedämpft, dann geschält, getrocknet und heiss passiert werden. Anschliessend werden die Eier unter den heissen Teig gemischt. Danach wird der Teig abgeschmeckt und abgekühlt. Das Mehl wird unter die kalte Masse gegeben. Je nach Kartoffelsorte, Lagerung der Kartoffeln vor und nach dem Kochen etc. wird der Teig feuchter oder trockener, klebriger oder brüchiger. Je länger die heisse Kartoffel unverarbeitet gelagert wird, desto mehr trocknet sie aus. Diese Eigenschaft kann beim Nachtrocknen im Backofen genutzt werden. Der geübte Koch wird die gewünschte Konsistenz des Teigs mit Hand und Auge prüfen und durch gezielte Beigabe von weniger oder zusätzlichem Mehl und/oder mehr Ei oder Eigelb erreichen.

Der Kartoffel-Schlutzkrapfenteig nach Longariva setzt sich aus 500 g Kartoffeln (ca. 61%), 2 Eigelb (ca. 9-10%), Salz, Muskat, 40 g Butter (ca. 4-5%) und 200 g Mehl (ca. 24-25%) zusammen. Auch hier sollen die Kartoffeln gedämpft, geschält und heiss gepresst werden. Alle Zutaten sollen anschliessend rasch zu einem Kartoffelteig zusammengeknetet werden.

Schlutzkrapfen aus Kartoffelteig sind zarter als solche aus Getreidemehlteig. Die Verarbeitung von Kartoffelteig zu einer um eine Füllung zu Taschen zusammenfaltbaren Teigschicht erfolgt jedoch bisher nur von Hand. Bei der manuellen Verarbeitung wird die Kartoffelmasse auf einer bemehlten Unterlage ausgerollt und die Oberfläche zwischen Wallholz und Teig von Zeit zu Zeit neu bemehlt. Die Mehlzugabe muss jedoch möglichst gering gehalten werden, um den Geschmack nicht zu stark zu beeinflussen. Der Teig bleibt zudem gerne auf der Unterlage kleben.

Aus der JP-A- 53 133 657 ist ein Verfahren zur Herstellung einer Zubereitung, welche gebratenen Kartoffeln gleicht, aus trockenem Kartoffelpulver bekannt. Die Zubereitung wird aus 0.5 - 20 Gew. % Glutenpulver, 0.2 - 10 Gew. % trockenem Eiweisspulver, 0.2 -10 Gew. % Sojaeiweiss-Pulver, 0.05- 5 Gew. % Polysachariden, 0.5 - 20 Gew. % Stärke und der Ergänzung auf 100% (35 - 99 %) Kartoffelpulver hergestellt. Dieses trockene Gemisch wird mit Wasser vermischt und der erhaltene Teig in passende Kartoffel-Form gebracht, um anschliessend diese "Kartoffeln" zu braten. Der Druckschrift ist kein Hinweis zu entnehmen, den Teig auszuwallen und zur Herstellung von Teigwaren zu verwenden. Ein Teig mit 99% Kartoffelpulver und lediglich 0.9% Eiweissen ist jedenfalls nicht maschinell zu einer geschmeidig faltbaren Teigschicht auswallbar.

Aus der JP-A-58116 665 geht eine Kartoffelkrokette hervor, deren Teig etwa aus 75 Gew. % pürierter Kartoffel, 10 Gew. % Weizenmehl, 5 Gew. % Hefe und 10 Gew. % Wasser oder Milch hergestellt ist. Der Teig wird ausgebreitet und eine Füllung damit eingepackt. Einschnitte in der Teighülle öffnen sich beim Erhitzen der Zubereitung, so dass die Füllung in einer blumenartigen Öffnung zum Vorschein kommt. Die Zubereitung enthält lebensfähige Hefe, welche bei der Herstellung von Teig für Teigwaren nicht verwendbar ist, da die den Teig aufblähende Wirkung der Hefe unerwünscht ist.

Aus der FR-A-2 018 501 ist bekannt, einem für das Soufflieren bestimmten Kartoffelteig, der geknetet, geformt, durch Kochen im Dampf gelatiniert und anschliessend getrocknet wird, um schliesslich durch Kochen oder Frittieren souffliert werden zu können, zur Erhöhung des Proteingehaltes eines der folgenden Proteine zuzusetzen: Protein aus Weizen (Gluten), aus Fleisch oder Fisch, vegetabiles Protein oder Protein aus einem mikrobiologischen Verfahren. Für das Soufflieren solcher Kroketten ist es notwendig, dass der Teig einen bestimmten Proteingehalt aufweist und dieser vor dem Soufflieren gelatiniert wird. Dazu ist praktisch jedes Protein geeignet. Eine über das Anreichern des Teigs mit Eiweiss hinausgehende technische Aufgabe, welche durch die Zugabe dieser Proteine zum Teig gelöst wird, ist nicht beschrieben. Teigwaren hingegen werden nicht souffliert und benötigen somit auch keinen Anteil an gelatiniertem Protein.

Aus der FR-A-2 432 842 ist ein Teig bekannt mit 20 bis 80 % pürierter Kartoffel, 5 bis 20 Prozent Gluten und als Ergänzung bis 100 % (10-75%) Mehl aufweist. Diesem Teig wird 5 bis 20 Gewichtsprozent Wasser zugesetzt, um ihn mit einem Erhitzer-Extruder zu einem Spezialbrot zu verarbeiten. Der Teig wird dazu im Extruder auf 160 °C erhitzt und erfährt beim Austritt aus dem Extruder durch Vaporisation des Wasserbestandteils eine starke Expansion. Teigzusammensetzung und Verarbeitungsverfahren stehen in einem direkten Zusammenhang. Hinsichtlich der Verarbeitung des Teigs zu Kartoffelteigwaren ist der Schrift nichts zu entnehmen. Die Verarbeitung mit einem Extruder verbunden mit der plötzlichen Vaporisation des Wassers und das dadurch bewirkte Aufgehen des Teiges zu einem "Brot" ist bei der Herstellung von Teigwaren nicht erwünscht. Die Zugabe von Getreidekleber zu Brotteigen, um einen luftigeren Teig zu erreichen, ist dem Bäcker bekannt. Im Gegensatz zu Broten sollen Teigwaren hingegen nicht luftig sein.

Bei der industriellen Fertigung von Nudeln und Kartoffelnocken wird ein Teig durch eine Matrize gepresst. Getreide-Teigwaren können sehr trocken ausgepresst und in der gewünschten Länge von der Auspressöffnung abgeschnitten werden. Bei Kartoffel-Gnocchi wird eine feuchte Masse durch die Matrize gepresst und die ausgepresste Teigwurst in Portionen geschnitten und geformt

Kartoffelteig wurde bisher nicht maschinell zu einer weichen Teigschicht verarbeitet, aus welcher Teigplätzchen geschnitten oder gestochen und z.B. zu Teigtaschen geformt werden könnten. Dies ist vorwiegend auf seinen zarten Zusammenhalt bei gleichzeitig sehr klebriger Oberfläche der Teigmasse zurückzuführen. Ein trockener Kartoffelteig, wie er z.B. für Chips hergestellt wird, bricht beim Falten oder auch schon vorher auseinander, ein feuchter Teig hingegen, wie er für handgefertigte Kartoffeltaschen verwendet wird, klebt an den mit ihm in Berührung kommenden Maschinenteilen. Bedingt durch diese Eigenheiten des Kartoffelteigs schlug bisher jeder Versuch, eine nicht stark klebende, geschmeidig faltbare Kartoffelteigschicht mit einem sehr hohen Kartoffelanteil maschinell herzustellen, fehl.

Aus der EP-A-0 296 039 ist ein Verfahren bekannt, mit welchem ein stärkehaltiger Teig, welcher kein Gluten enthalten muss, zu einem Chips-ähnlichen Snack verarbeitet werden kann. Damit die normalerweise durch Zugabe von glutenhaltigen Stärkeprodukten, z.B. Weizenmehl, erreichte Elastizität des Teigs ohne eine solche Zugabe von glutenhaltigen Produkten erreicht wird, wird dieser unter Druck und Hitze in einem Extruder durchgewalkt. Dadurch wird gemäss dieser Schrift auf bisher nicht erklärte Weise eine Elastizität des Teigs erreicht, welche diesen auf herkömmlichen Snack-Maschinen verarbeitbar macht. Inwieweit mit diesem Verfahren ein Teig hergestellt werden könnte, welcher für die Herstellung von Kartoffelteigwaren verwendet werden kann, ist nicht bekannt. Für das Ausrollen des Teigs ist es jedenfalls erwünscht, dass dieser möglichst plastisch und nicht elastisch ist.

Durch eine stärkere Zugabe von Mehl zum herkömmlichen, von Hand verarbeitbaren Kartoffelteig verliert der Teig zunehmend seine kartoffelteigspezifischen Eigenheiten wie Spröde und Klebrigkeit. Er kann dann ab einem Mehlanteil von etwa 30% des Gesamtgewichts wohl maschinell verarbeitet werden, verliert aber gleichzeitig die vom Gourmet gewünschte Zartheit. Eine im Gastgewerbe wirtschaftliche Herstellung von Kartoffelteigtaschen mit höherem Kartoffelanteil war bisher wegen der Klebrigkeit des Kartoffelteigs denn auch undenkbar. Eine maschinelle Herstellung galt bislang als unmöglich.

Dass die industrielle Herstellung von solchen Schlutzkrapfen und Kartoffelteig-Nudeln bis anhin noch nicht gelungen ist, ist umso bedauerlicher, als bei der industriellen Pommes frites-Herstellung tonnenweise Kartoffelabschnitte entstehen, welche durch die Weiterverarbeitung zu Kartoffelpüree, Kroketten, kartoffelhaltigen Snacks, Tierfutter etc. längst nicht abgetragen werden. Tonnenweise werden deshalb in der Pommes frites-Industrie Kartoffelabschnitte vernichtet, welche bei einer industriellen Fertigung von Kartoffelteigwaren verwertbar wären.

Es ist deshalb Aufgabe der Erfindung, einen Weg zu zeigen, wie ein wirtschaftlich und maschinell verarbeitbarer, zarter Kartoffelteig für Kartoffelteigwaren, mit einem Kartoffelanteil von über 60% des Gesamtgewichts, hergestellt und wie ein solcher Kartoffelteig maschinell oder halbmaschinell zu Teigwaren, insbesondere zu gefüllten Teigtaschen verarbeitet werden kann. Diese Kartoffelteigwaren sollen im Gastgewerbe und im Privathaushalt mit minimalem Aufwand zu einer leckeren Kartoffelmahlzeit zubereitet werden können.

Bei einem Kartoffelteig zur Herstellung von Kartoffelteigwaren, insbesondere Kartoffelteigtaschen, aus Kartoffeln und weiteren Zutaten wird dies erfindungsgemäss durch quellfähiges Protein erreicht, welches dem Teig zusätzlich zu dem in den übrigen Zutaten allenfalls bereits enthaltenen Anteil an quellfähigem Protein zugesetzt ist. Quellfähige Proteine sind Globulin, Getreidekleber, oder Kollagen. Weitere Zutaten sind in der Regel Mehl, welches ebenfalls quellfähiges Protein enthält, Ei, Salz und Gewürze. Dank der Zugabe von quellfähigem Protein als gesonderter Bestandteil des Teigs kann der Kartoffelteig einen Anteil von über 60% oder vorzugsweise sogar über 70% des Gesamtgewichts an pürierter Kartoffel aufweisen. Der Mehlanteil kann unter 25% gesenkt werden, oder bevorzugt sogar unter 18% des Gesamtgewichts, wobei ein Anteil an flüssigen Eibestandteilen zwischen 5 und 13% zweckmässig ist. Bei der Verwendung von trockenen Eibestandteilen verringert sich der gewichtsprozentuale Anteil entsprechend. Ein solcher Teig kann trotz reduziertem Mehlanteil und hohem Kartoffelanteil maschinell auswallbar und zu Nudeln und Kartoffelteigtaschen verarbeitet werden.

Bevorzugt wird eine Zugabe von Gluten, dem Kleberprotein des Getreides. Dieses wird vorwiegend aus der Aleuron- oder Kleieschicht des Getreides gewonnen. Der Bestandteil an Getreidekleber ist praktisch geruch- und geschmacklos und beeinflusst die Zartheit des Teigs in der notwendigen Dosierung nur unbedeutend. Er ist als Pulver im Handel erhältlich und kann daher als Trockenmasse in die Teigmischung eingearbeitet werden. Die Zugabe von quellfähigem Roh-Protein ermöglicht auch das Einhalten einer bestimmten Feuchtigkeit des Teigs. Da es Feuchtigkeit bindet, ermöglicht es eine relativ hohe Teigfeuchte. Dies macht diesen auf herkömmlichen Bäckereimaschinen verarbeitbar, ohne dass der Mehlanteil über 25% angehoben werden muss. Das Roh-Protein wird durch Erhitzen der Kartoffelteigwaren auf 60 bis 85°C verfestigt. Dadurch wird der Teig beim Erhitzen verfestigt, so dass die Teigware danach weniger verletzlich ist. Die Zugabe von relativ geringen, geschmacklich und in der Konsistenz des fertigen Produkts kaum spürbare Mengen an Getreidekleber bewirkt eine überraschende Reduktion der Klebrigkeit und Verbesserung der Faltbarkeit des Teigs.

Die so hergestellten zarten Schlutzkrapfen aus Kartoffelteig mit hohem Anteil an Kartoffelbestandteilen, finden, seitdem sie als Fertig- oder Halbfertiggericht käuflich erwerbbar sind, wegen des feinen Geschmackes und der Zartheit des Teigs grossen Absatz.

Eine die Wirkung des quellfähigen Proteins unterstützende Wirkung können Stärke, z.B. aus Mais, Kartoffeln, Reis, Pfeilwurzmehl und dergleichen haben. Auch mit Gummiarabicum, Guarkernmehl und verwandten Hilfsstoffen oder Geliermittel wie Gelatine, Agar Agar und dergleichen kann die Teigkonsistenz zur besseren Verarbeitung günstig beeinflusst werden. Diese Stoffe können zusätzlich zum quellfähigen Protein in kleinen Mengen zugemischt sein.

Als Ausgangsmaterial für den Kartoffelteig wird vorzugsweise eine Krokettenmasse genommen. Eine im Handel erhältliche, geeignete Krokettenmasse setzt sich beispielsweise aus Speisekartoffeln, Kartoffelflocken, Speisefett, Magermilchpulver, Eiweisspulver, Kochsalz, Gewürzen und Stabilisatoren zusammen. Die Trockenmasse einer geeigneten Krokettenmasse liegt bei etwa 33%. Die Feuchtigkeit kann durch die Zugabe von Kartoffelflocken reguliert werden. Schwankungen der Trockenmasse zwischen 33,5 und 32,5% sind für den Teig gut verträglich. 94 bis 95% der Krokettenmasse bestehen aus gekochten Kartoffeln. Dazu kommen 2 bis 3% Kartoffelflocken, je nach Wassergehalt der Kartoffeln. Etwa 3% der Krokettenmasse können z.B. Speisefett, Magermilchpulver, Eiweisspulver, Salz, Gewürze und Stabilisatoren ausmachen.

Am Gesamtgewicht des Kartoffelteigs macht vorteilhaft Mehl einen Anteil von 10 bis 20%, vorzugsweise 12 bis 18%, besonders bevorzugt 13 bis 17% aus. Der Kleber macht einen solchen von 3 bis 0,75%, bevorzugt etwa 2,1% aus. Die Zugabe von Weissmehl muss gegenläufig zur Zugabe von Kleber dosiert sein. Je mehr Weissmehl im Teig enthalten ist, desto weniger zusätzlicher Kleber sollte der Teig aufweisen, und umgekehrt. Vorteilhaft ist der Mehlanteil möglichst unter 16% des Gesamtgewichts.

Vorteilhaft ist ein Verhältnis von 45 bis 55 ml, vorzugweise 50 ml flüssigem Eigelb auf jedes Kilogramm Mehl. Ein Verhältnis zugunsten des Mehls macht den Teig zu trocken, ein Verhältnis zugunsten des Eigelbs zu feucht. Eine Mindestmenge an Eigelb gewährt das Binden des Teigs beim Kochen.

Bei einem Verfahren zur Herstellung eines für Kartoffelteigtaschen geeigneten, maschinell verarbeitbaren Kartoffelteigs wird eine Krokettenmasse, wie sie z.B. im Handel erhältlich ist, mit quellfähigem Protein vermischt. Als quellfähiges Protein wird Getreidekleber bevorzugt. Zusätzlich werden in der Regel Eigelb, Mehl und Gewürze beigegeben.

Die Krokettenmasse wird dabei vorteilhaft vorgängig hergestellt. Sie wird vorzugsweise aus etwa 90 bis 98%, vorzugsweise 94-96% Kartoffeln, und bis zu 5%, vorzugsweise 2-3% Kartoffelflocken, und Hilfsstoffen hergestellt. Die Hilfsstoffe sind vorteilhaft praktisch feuchtigkeitsfrei. Bei dieser Mischung ist der Trockenanteil zwischen 32 und 34 %. Der bevorzugte Trockenanteil liegt bei ca. 33%, um einen maschinentauglichen Kartoffelteig zu erhalten.

Vorteilhaft wird die Krokettenmasse vor der Verarbeitung zu Kartoffelteig kühlgestellt oder gar portioniert und gefroren oder tiefgekühlt. Die kühle Krokettenmasse wird in diesem Fall ohne erwärmen mit den übrigen Zutaten des Kartoffelteigs vermischt. Dazu werden alle Zutaten kräftig miteinander verrührt Dieses Mischen sollte nach der Zugabe des Getreideklebers nicht länger als 120 Sekunden dauern, vorteilhaft lediglich etwa 10 bis 20 Sekunden, damit die Teigmasse nicht elastisch wird. Ein langes Bearbeiten der Teigmasse hat zur Folge, dass das Endprodukt zäh wird.

Bei einem Verfahren zur Herstellung und Verarbeitung von Kartoffelteigwaren, insbesondere von gefüllten Teigtaschen, wird ein solcher Kartoffelteig zweckmässigerweise auf einer Teigausrollmaschine bis auf eine Dicke von 2 bis 4 mm, vorzugsweise 2,5 bis 3,5 mm, besonders bevorzugt 3 mm, ausgerollt und werden eine bestimmte Form aufweisende Teigplätzchen aus der Teigschicht ausgeschnitten oder ausgestochen.

Aus hygienischen Gründen wird der Teig vorteilhaft vor dem Ausrollen auf 2 bis 6 °C, vorzugsweise 3 bis 5 °C, abgekühlt. Dadurch ist er beim anschliessenden Schocktieffrieren auch rascher erstarrt als wärmerer Teig. Auch die Füllung wird auf diese Temperaturen gekühlt.

Zweckmässigerweise wird auf das Teigplätzchen maschinell eine Portion Füllung gegeben und anschliessend durch Falten des Teigplätzchens, von Hand oder maschinell, die Füllung mit der Teigschicht umschlossen. Vorteilhaft wird anschliessend das gefaltete und gefüllte Teigplätzchen mit einem die Teigschichtränder des zusammengefalteten Teigplätzchens beschneidenden und verpressenden Werkzeug bearbeitet, so dass die Teigtaschen geschlossen und gleichmässig geformt sind. Die aufeinander gelegten Ränder des Teigplätzchens müssen in erster Linie aneinander haften. Die Füllung darf nicht austreten können. Zweitrangig ist das Beschneiden des Randes, welches hauptsächlich aus ästhetischen Gesichtspunkten geschieht.

Die fertig geformten Teigwaren werden vorteilhaft sofort schockartig tiefgekühlt, und in tiefgekühltem Zustand allenfalls weiterverarbeitet, z.B. portionenweise abgepackt. Erst im tiefgekühlten Zustand sind die Teigwaren, insbesondere die gefüllten Teigtaschen, genügend robust, um geschichtet oder geschüttet zu werden.

Vorteilhaft werden für Ihre Zubereitung die tiefgekühlten Kartoffelteigwaren für eine kurze Zeit, z.B. 3 bis 5 Minuten, in siedendes Wasser oder Frittieröl, Steamer oder Regenerierapparat gegeben und dort erhitzt. Ein Auftauen vor dem Erhitzen ist nicht notwendig. Es würde lediglich die Verletzlichkeit der Kartoffelteigwaren derart erhöhen, dass diese kaum ohne dabei teilweise zerstört zu werden in den Topf, die Fritteuse, den Steamer oder den Regenerierapparat gegeben werden könnten.

Vorteilhaft wird zur Herstellung von Kartoffelteigschichten bestimmter Dicke für Kartoffelteigwaren eine Ausrollmaschine der aus dem Bäckereisektor bekannten Art verwendet.

Bevorzugt wird zur Herstellung von Kartoffelteigwaren eine Vorrichtung mit einer Ausrollmaschine und einer Ausstechmaschine verwendet. Die vorteilhaft verwendetet Ausstechmaschine ist mit einer drehbaren Walze ausgerüstet, mit einem im Abstand zur Walze angeordneten Förderband zur Beförderung einer darauf liegenden Teigschicht an der drehenden Walze vorbei, und mit Ausstechformen auf der Walze. Die Ausstechformen können mit Ausstechkanten auf dem Förderband aufliegen. Diese Art von Maschine ist aus dem Bäckereisektor bekannten.

Bei einer Vorrichtung zur Herstellung von Kartoffelteigwaren, mit einer Ausstechmaschine mit einer drehbaren Walze, einem im Abstand zur Walze angeordneten Förderband zur Beförderung einer darauf liegenden Teigschicht an der drehenden Walze vorbei, mit Ausstechformen auf der Walze, welche mit einer Ausstechkante auf dem Förderband aufliegen können, wobei die Maschine der aus dem Bäckereisektor bekannten Art ist, sind die Ausstechformen voneinander durch einen Zwischenraum getrennt und ist im Zwischenraum zwischen den Ausstechformen eine Ausstosseinrichtung zum Ausstossen eines zwischen den Ausstechformen haftenden Teigschichtrestes angeordnet. Dadurch kann der klebrige, zwischen den Formen hängen bleibende Teig nicht mit der vom Förderband sich entfernenden Ausstechkante vom Förderband abgehoben werden.

Vorteilhaft ist ein quer zur Förderrichtung des Förderbandes angeordneter, federnd gelagerter Stab als Ausstosseinrichtung und ein Distanzhalter vorgesehen. Der Distanzhalter hält bei teigauflagenaher Position der Ausstosseinrichtung diese entgegen der Federkraft in einem Abstand zur Teigauflage und ist in einer wenigsten um Teigschichtstärke von der Teigauflage entfernten Position unwirksam. Dadurch wird der Teig nur darin durch die Ausstossvorrichtung berührt, wenn dieser nicht auf der Teigauflage liegen bleibt, sondern mit der Form von der Teigauflage abgehoben wird.

Vorteilhaft ist die Ausstechmaschine mit zwei in Durchlaufrichtung der Teigschicht hintereinander angeordneten, zusammen gekoppelten Ausstechwalzen ausgerüstet, wobei die Walzen mit komplementären, z.B. halben Ausstechformen ausgerüstet sind. Diese Ausstechformen sind derart auf den Walzen angeordnet, dass beim Ausstechen eines Kartoffelteigplätzchens beim Durchgang der Teigschicht unter einer Walze die eine Hälfte des Plätzchens und beim Durchgang der Teigschicht unter der anderen Walze die anderen Hälfte des Teigplätzchens ausgestochen wird. Es könnten auch drei Walzen hintereinander angeordnet sein mit je einer etwa einen Drittel des Plätzchens ausstechender Ausstechform. Durch das Aufteilen der gesamten Form auf mehrere Ausstechformen bleibt das ausgestochene Plätzchen nicht in der Ausstechform hängen. Der auf der Auflage liegende und von der Ausstechform nicht umfasste Teil des Teigplätzchens hilft mit seinem Gewicht den von der Ausstechform umfassten Teil von dieser zu lösen.

Im folgenden wird die Erfindung anhand von Beispielen näher erläutert. Ein erfindungsgemässer und bevorzugter Kartoffelteig besteht aus:

| | |
|---|---|
| 5 kg | Kartoffel-Kroketten-Masse mit einer Trockenmasse von 33%, |
| 1 kg | Weissmehl |
| 50 ml | pasteurisiertem Eigelb, flüssig, |
| 100 - 140g | Gluten- oder Aleuronpulver, je nach Kartoffelmasse, |
| 50 g | Kochsalz, |

wobei die Krokettenmasse zu 95% aus gekochten Kartoffeln und je nach Feuchtigkeit der Kartoffeln zu 2 bis 3 Prozent aus Kartoffelflocken hergestellt ist. Die übrigen Zutaten sind beispielsweise Speisefett ca. 1%, Magermilchpulver ca. 0.7%, Eiweisspulver ca. 0.7°/O, Kochsalz ca. 0.5%, Gewürze und Stabilisatoren in geringen Mengen. Die Anteile der Komponenten der Krokettenmasse können variieren. Empfindlich ist der Kartoffelteig insbesondere in Bezug auf die Feuchtigkeit der Krokettenmasse.

Diese Zutaten werden zusammengeschüttet und kräftig gemischt, was einen deutlich nach Kartoffeln duftenden Teig ergibt, welcher mit Maschinen weiterverarbeitbar ist. Zum Kneten wird vorteilhaft eine Teigknetmaschine eingesetzt und während einer Dauer von ca. 10 Sekunden relativ hochtourig laufen gelassen. Anschliessend wird der Teig auf 4 Grad Celsius abgekühlt Für die Herstellung von gefüllten Teigtaschen wird parallel dazu eine Füllung hergestellt und ebenfalls auf 4 Grad abgekühlt.

Der Teig wird auf das bemehlte Förderband einer Ausrollmaschine, wie sie in Bäckereien zum Ausrollen von Teig benützt werden, gelegt. Der Teig wird anschliessend mehrmals zwischen zwei parallelen, aktiv in gegensätzlicher Richtung drehenden Stahlwalzen hindurchgeführt. Bei jedem Durchgang sind die Walzen in einem kleineren Abstand zueinander angeordnet. Vor den Walzen wird der Teig automatisch laufend mit etwas Mehl bestäubt.

Liegt der Teig in der gewünschten Schichtstärke vor, wird er mit dem Förderband zur Ausstechmaschine transferiert. Dort wird der Teig durch Ausstechformen auf zwei parallel laufenden Walzen ausgestochen. Zum besseren Verständnis des Ausstechvorganges wird auf die folgende Beschreibung der Zeichnungen verwiesen.

Es zeigt
- Figur 1:: einen Ausschnitt aus einer Ausstechmaschine mit Tandemwalzen,
- Figur 2:: ein schematisch dargestellter, vertikaler Detailschnitt im Bereich der Walze mit Ausstosseinrichtung,
- Figur 3:: eine Darstellung des Ausstechvorganges anhand eines schematische dargestellten, teilweise gestanztes Teigschichtstückes.

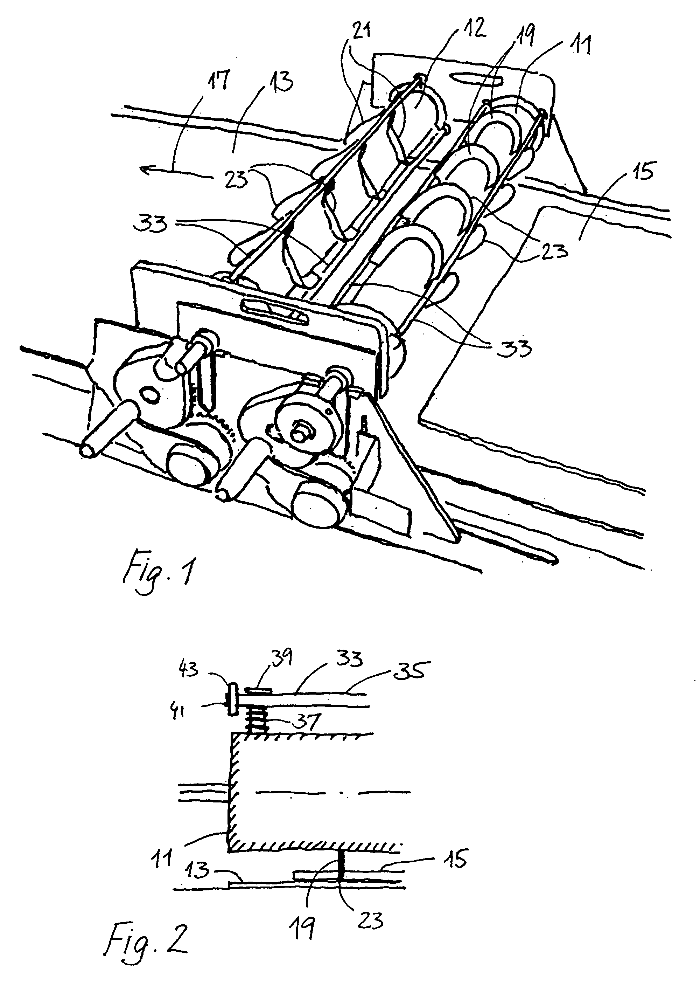

Die in **Figur 1** dargestellten Tandemwalzen 11 und 12 sind über einem Förderband 13 angeordnet. Auf dem-Förderband 13 liegt eine Teigschicht 15. Mit dem Förderband wird die ausgerollte Teigschicht 15 in Richtung des Pfeiles 17 von rechts nach links unter den Walzen 11,12 hindurchbewegt. Die Walzen 11,12 sind mit einer Mehrzahl von Ausstechformen 19, resp. 21 ausgerüstet. Diese weisen eine Kante 23 auf, welche sich entlang einer Zylinderoberfläche erstreckt und die auszustechende Teigplätzchenform beschreibt. Diese Kanten 23 liegen zum Ausstechen der Plätzchen senkrecht unter der Walzenachse auf dem Förderband 13 auf. Während die Teigschicht 15 unter den Walzen mit den Ausstechformen 19 und 21 hindurchgeführt wird, drehen die Walzen 11,12 mit einer Geschwindigkeit, welche im Bereich der Kanten 23 der Vorschubgeschwindigkeit des Förderbands 13 entspricht. Beim Abrollen der Kanten 23 auf dem Förderband 13 wird ein unter den Walzen 11,12 hindurchgeführter Teig entlang diesen Kanten 23 durchstossen und so eine bestimmte Form 25 aus der Teigschicht 15 ausgestochen.

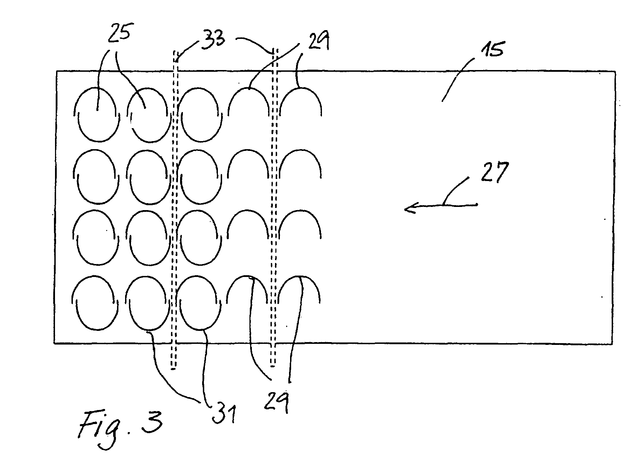

Wie die **Figur 1** weiter zeigt sind auf den beiden parallel bewegten Walzen 11 und 12 entgegengesetzt gerichtete Halbkreisformen 19, resp. 21 angeordnet. Diese wirken wie in der Figur 3 dargestellt, zusammen. Sie stechen je eine Hälfte eines runden Plätzchens 25 aus der Teigschicht 15 aus. Während die Teigschicht 15 in Richtung des Pfeils 27 unter den Tandemwalzen 11 und 12 (Fig. 1) hindurchgeführt wird stechen zuerst die Ausstechformen 19 auf der Walze 11 die oberen, bzw. in Laufrichtung der Teigschicht betrachtet die rechten Plätzchenhälften aus. Anschliessend stechen die Ausstechformen 21 auf der Walze 12 die zweite Hälfte der Plätzchen 25 aus. Auf der Darstellung in Figur 3 sind die beiden Schnittlinien 29 und 31 der Kanten 23 der Ausstechformen 19 und 21 nicht exakt zusammengeführt, damit die einzelnen Schnittlinien auf der Zeichnung besser unterschieden werden können. In Wirklichkeit werden die Schnittlinien 29 und 31 möglichst exakt zusammengeführt.

Nach dem Ausstechen der Schnittline 29 ist die Plätzchenhälfte noch mit der gesamten Teigschicht verbunden, so dass es sich mit Sicherheit von der Ausstechform ablöst. Nach dem Ausstechen der Schnittlinie 31 hängt das Plätzchen 25 mit seinem gesamten Gewicht an der Schnittlinienhälfte, welche an der Ausstechform 21 klebt, so dass auch dieser Schritt ohne die Gefahr des Abhebens oder Verschiebens des Plätzchens 25 vorgenommen werden kann.

Damit der Rest der Teigschicht 15, welcher zwischen den Plätzchen 25 vorliegt, nicht von der Auflage, d.h. dem Förderband 13 abgehoben wird, sind zwischen den Ausstechformen 19,21 Ausstosseinrichtungen 33 angeordnet. In Figur 3 sind diese als gestrichelte Doppellinie dargestellt. Die Ausstosseinrichtungen 33 halten die Teigschicht 15 zwischen benachbarten Ausstechformen 19,21 mit Federkraft gegen die Unterlage 13 solange sich eine der nahe beieinander liegenden Kanten 23 der beiden benachbarten Ausstechformen 19,21 im Innern der Teigschicht 15 befindet.

In **Figur 2** ist ein Walzenende der Walze 11 im Schnitt dargestellt. Unter der Walze 11 befindet sich eine Teigschicht 15 auf dem Förderband 13. Die Ausstechform 19 liegt mit der Kante 23 auf dem Förderband 13 auf. Der Teig 15 ist daher von der Kante 23 durchstossen worden. Eine der drei Ausstosseinrichtungen 33 zwischen den drei Reihen von Ausstechformen 19 der Walze 11 liegt auf der zu der aktiven Ausstechform 19 entgegengesetzten Seite der Walze 11. Die Ausstosseinrichtung 33 weist einen teflonierten Stab 35 auf. Dieser ist radial verschiebbar an der Walze gelagert. Eine Feder 37 presst den Stab 35 von der Walze 11 weg gegen einen Anschlag 39.

An den Enden 41 der Rundstäbe 35 ist axial eine kreisrunde Distanzscheibe 43 angeordnet. Die Distanzscheibe 43 weist einen um etwa die Teigschichtstärke grösseren Radius als der Stab 35 auf. Wenn die Scheibe 43 beim Drehen der Walze 11 mit ihrem äusseren Rand auf der Unterlage 13 aufliegt wird der Stab 35 gegen die Federkraft in Abstand zur Auflage 13 gehalten. Der Stab 35 bewegt sich daher während dem Drehen der Walze in einem Abstand und parallel zum Förderband 13. Dadurch drückt der Stab 35 auch dann nicht auf die Teigschicht 15, wenn diese unter der Walze 11 hindurchgeführt wird. Wird der Stab 35 beim Weiterdrehen der Walze 11 durch die Feder 37 schliesslich wieder gegen den Anschlag 39 der Walze 11 gepresst, beginnt er sich vom Förderband 13 zu entfernen. In diesem Moment, wenn der Stab 35 am Anschlag 39 anschlägt, ist die Ausstechform 19 wieder vollständig aus der Teigschicht 15 herausgezogen.

Eine Alternative zur Scheibe 43 ist ein parallel zum Förderband angeordneter Distanzanschlag an der Maschine, über welchen der Stab 35 beim Drehen der Walze 11 gleitet oder rollt. Ein solcher Distanzanschlag könnte in der Höher verstellbar sein, um ihn auf die Teigschichtdicke einzustellen. Zur Anpassung der Scheibenradien der Distanzscheiben 43 hingegen sind neue Scheiben mit anderem Radius zu montieren.

Damit die Teigschicht weniger an den Ausstechformen klebt, wird sie vor dem Ausstechen mit Mehl bestäubt. Das Mehl wird anschliessend an das Ausstechen wieder sorgfältig weggewischt, damit es den Geschmack der Teigwaren nicht beeinflusst.

Die Teigschicht kann in dieser Art in beliebig geformte Plätzchen zerschnitten werden. Möglich sind je nach Teigschichtstärke Nudeln oder Nocken, Lasagneplättchen oder Teigschichten für Rouladen. Sollen die Teigwaren gefüllt werden, kann eine erste Teigschicht mit Füllungsportionen bestückt werden, dann eine zweite Teigschicht darübergelegt und beide Teigschichten zusammen ausgestochen werden. Sollen die Teigtaschen jedoch gefaltet sein, kann ein Plätzchen 25 in beliebiger Form ausgestochen, mit eine Füllungsportion versehen und gefaltet werden. Damit diese Taschen beim Weiterverarbeiten sich nicht öffnen, müssen die Ränder der übereinander liegenden Teigschichten gut zusammengepresst werden. Vorteilhaft werden gleichzeitig mit dem Zusammendrücken der Teigplätzchenränder diese auch geschnitten.

Zusammenfassend gesagt werden Kartoffelschlutzkrapfen aus einem Teig hergestellt, welcher zusammengesetzt ist aus einer 33% Trockenmasse aufweisenden Krokettenmasse (etwa 75%), flüssigem Eigelb (etwa 7.5 %), Mehl (etwa 15%), Salz und Gewürze, und Getreidekleber (etwa 1,5%). Die Krokettenmasse besteht zu etwa 97% aus Kartoffeln und Kartoffelflocken. Der Teig wird etwa 10 bis max. 20 Sekunden geknetet und nach dem Auskühlen mit einer Bäckereimaschine ausgerollt und aus der ausgerollten Teigschicht werden mit einer Bäckereimaschine Plätzchen geschnitten. Im Zwischenraum zwischen den mit Abstand zueinander auf Walzen 11,12 der Ausstechmaschine angeordneten Ausstechformen 19,21 sind Ausstosseinrichungen 33 zum Ausstossen des Restes der Teigschicht 15 vorgesehen.

## Patentansprüche

1. Verwendung eines Kartoffelteigs aus über 60 Gewichtsprozent Kartoffeln, ferner Mehl und allenfalls Eibestandteilen, welchem ein quellfähiges Protein, vorzugsweise Getreidekleber, zusätzlich zu dem in den übrigen Zutaten bereits enthaltenen Anteil an quellfähigem Protein zugesetzt ist, zur maschinellen Herstellung von Kartoffelteigwaren (25), insbesondere Karoffelteigtaschen.

2. Verwendung nach Anspruch 1, bei welcher der Kartoffelteig 5 bis 13% flüssige Eibestandteile und einen Mehlanteil von unter 25% des Gesamtgewichts enthält.

3. Kartoffelteigware (25), insbesondere Kartoffelteigtasche, aus einer Kartoffelteigschicht, deren Kartoffelteig über 60 Gew. % Kartoffeln und Mehl, jedoch weniger als 25 Gew.%, aufweist, **dadurch gekennzeichnet, dass** demTeig, zusätzlich zu dem in den übrigen Zutaten bereits enthaltenen Anteil an quellfähigem Protein, ein quellfähiges Protein, vorzugsweise Getreidekleber, zugesetzt ist.

4. Kartoffelteigware aus einem Kartoffelteig gemäss einem der Ansprüche 5 bis 11.

5. Kartoffelteig für Kartoffelteigwaren (25), enthaltend über 60 Gewichtsprozent pürierte Kartoffeln, ferner Getreidemehl, jedoch weniger als 25 Gew. % und flüssige Eibestandteile, **gekennzeichnet durch**, zusätzlich zu dem im Mehl bereits enthaltenen Getreidekleber, dem Teig separat zugefügtes quellfähiges Protein.

6. Kartoffelteig nach Anspruch 5, **dadurch gekennzeichnet, dass** das quellfähige Protein Getreidekleber ist.

7. Kartoffelteig nach Anspruch 6, **dadurch gekennzeichnet, dass** das Mehl 10 bis 20%, vorzugsweise 12 bis 18%, besonders bevorzugt 13 bis 17%, und der Kleber 3 bis 0,75%, bevorzugt 2,5 bis 1,4%, besonders bevorzugt 2,1 % des Gesamtgewichts ausmacht.

8. Kartoffelteig nach einem der Ansprüche 5 bis 7, **gekennzeichnet durch** 45 - 55 ml, vorzugsweise 50 ml flüssiges Eigelb pro kg Mehl.

9. Kartoffelteig nach einem der Ansprüche 5 bis 8, **dadurch gekennzeichnet, dass** er hergestellt wurde, indem quellfähiges Protein, insbesondere Getreidekleber, Mehl sowie flüssiges Eigelb einer fertigen Krokettenmasse zugesetzt wurden.

10. Kartoffelteig nach Anspruch 9, **dadurch gekennzeichnet, dass** die Krokettenmasse vorgängig aus 90 bis 98%, vorzugsweise 94-96% Kartoffeln, bis zu 5%, vorzugsweise 2-3% Kartoffelflocken, und Hilfsstoffen, mit einem Trockenanteil zwischen 31 und 35 %, vorzugsweise ca. 33% hergestellt wurde.

11. Kartoffelteig nach einem der Ansprüche 5 bis 10, **dadurch gekennzeichnet, dass** bei seiner Herstellung das dem Kartoffelteig zugesetzte Protein während weniger als 120 Sekunden, vorteilhaft 7 bis 20 Sekunden, vorzugsweise etwa 10 Sekunden kräftig mit dem Kartoffelteig verrührt wird.

12. Verfahren zur Herstellung und Verarbeitung von Kartoffelteigwaren, insbesondere von gefüllten Teigtaschen, bei welchem ein Kartoffelteig aus Kartoffeln und weiteren Zutaten darunter Mehl und gegebenenfalls Eibestandteile, hergestellt wird, **dadurch gekennzeichnet, dass** dem Teig ein quellfähiges Protein, vorzugsweise Getreidekleber zusätzlich zu dem in den übrigen Zutaten allfällig bereits enthaltenen Anteil an quellfähigem Protein zugesetzt wird, der Teig anschliessend auf einer Teigausrollmaschine bis auf eine Dicke von 2 bis 4 mm, vorzugsweise 2,5 bis 3,5 mm, besonders bevorzugt auf 3 mm, ausgerollt wird und ein eine bestimmte Form aufweisendes Teigplätzchen (25) aus der Teigschicht (15) ausgeschnitten oder ausgestochen wird.

13. Verfahren nach Anspruch 12, **dadurch gekennzeichnet, dass** das dem Kartoffelteig zugesetzte Protein während weniger als 120 Sekunden, vorteilhaft während 7 bis 20 Sekunden, vorzugsweise etwa 10 Sekunden kräftig mit dem Kartoffelteig verrührt wird.

## Claims

1. Use of a potato dough consisting of over 60 percent by weight potatoes as well as flour and possibly egg constituents, to which a protein with swelling properties, preferably grain gluten, is added in addition to the proportion of protein with swelling properties already contained in the remaining ingredients, for machine manufacture of potato dough products (25) in particular potato dough pouches.

2. Use in accordance with Patent Claim 1, in which the potato dough contains 5 to 13 % liquid egg constituents and a proportion of flour amounting to less than 25 % of the total weight.

3. Potato dough product (25), in particular a potato dough pouch, consisting of a potato dough layer with the potato dough containing over 60 percent by weight potatoes and flour, but less than 25 percent by weight, **characterized** such that, in addition to the proportion of protein with the swelling properties already contained in the remaining ingredients, a protein with swelling properties, preferably grain gluten, is added to the potato dough.

4. Potato dough product made of potato dough in accordance with Patent Claims 1 to 11.

5. Potato dough for potato dough products (25), containing over 60 percent by weight pureed potatoes, as well as grain flour, however, less than 25 percent by weight and liquid egg constituents, **characterized** such that, in addition to the grain gluten already contained in the flour, protein with swelling properties is separately added to the dough.

6. Potato dough in accordance with Patent Claim 5, **characterized** such that the protein with swelling properties is grain gluten.

7. Potato dough in accordance with Patent Claim 6, **characterized** such that the flour constitutes 10 to 20 %, preferably 12 to 18 %, preferentially 13 to 17 % and the gluten 3 to 0.75 %, preferably 2.5 to 1.4 %, preferentially 2.1 % of the total weight.

8. Potato dough in accordance with one of the Patent Claims 5 to 7 **characterized by** 45 ― 55 ml, preferably 50 ml liquid egg per kg flour.

9. Potato dough in accordance with one of the Patent Claims 5 to 8, **characterized** such that it is manufactured by adding protein with swelling properties, in particular grain gluten, flour and liquid egg to a finished croquette mass.

10. Potato dough in accordance with Patent Claim 9, **characterized** such that the croquette mass is chiefly made from 90 to 98 %, preferably 94 ― 96 % potatoes up to 5 %, preferably 2 ―3 % potato flakes and process agents with a dry proportion between 31 and 35 % preferably approx. 33 %.

11. Potato dough in accordance with one of the Patent Claims 5 to 7, **characterized** such that during its manufacture, the protein added to the potato dough is vigorously mixed with the potato dough for less than 120 seconds, advantageously 7 to 20 seconds, preferably about 10 seconds.

12. Process for manufacturing and processing potato dough products, in particular filled dough pouches, for which a potato dough is made, consisting of potatoes and other ingredients, including flour and egg constituents, **characterized** such that in addition to the proportion of protein with swelling properties already contained in the remaining ingredients, a protein with swelling properties, preferably grain gluten, is added to the dough, the dough is then rolled out on a dough rolling machine to a thickness of 2 to 4 mm, preferably 2.5 to 3.5 mm, preferentially to 3 mm and a piece of dough exhibiting a certain form (25) is cut out of the dough layer (15).

13. Process in accordance with Patent Claim 12, **characterized** such that the protein added to the potato dough is vigorously mixed with the potato dough for less than 120 seconds, preferably for 7 to 20 seconds, preferentially for approx. 10 seconds.

## Revendications

1. Utilisation d'une pâte à base de pommes de terre constituée par plus de 60 % en poids de pommes de terre, en plus de farine et au besoin d'ingrédients d'if à laquelle il est ajouté une protéine capable de gonfler, de préférence une colle de céréale, en plus de la part de protéine capable de gonfler déjà contenue dans les autres ingrédients pour la fabrication mécanique de pâtes alimentaires à base de pommes de terre (25), en particulier de chaussons aux pommes de terre.

2. Utilisation selon la revendication 1 pour laquelle la pâte à base de pommes de terre contient 5 à 13% d'ingrédients d'if liquides et une part de farine de plus de 25% en poids du poids total.

3. Pâte alimentaire à base de pommes de terre (25), en particulier chausson aux pommes de terre, constituée par une couche de pâte à base de pommes de terre dont la pâte à base de pommes de terre présente plus de 60% en poids de pommes de terre et de la farine, cependant moins de 25% en poids, **caractérisée en ce qu'**il est ajouté à la pâte une protéine capable de gonfler, de préférence une colle de céréale, en plus du taux de protéine capable de gonfler déjà contenu dans les autres ingrédients.

4. Pâte alimentaire à base de pommes de terre constituée par une pâte à base de pommes de terre selon l'une des revendications 5 à 11.

5. Pâte à base de pommes de terre pour pâtes alimentaires à base de pommes de terre (25), contenant plus de 60% en poids de pommes de terre écrasées en purée, de plus de la farine de céréales, cependant moins de 25% en poids et des ingrédients d'if liquides, **caractérisée par** une protéine capable de gonfler ajoutée séparément à la pâte en plus de la colle de céréale déjà contenue dans la farine.

6. Pâte à base de pommes de terre selon la revendication 5, **caractérisée en ce que** la protéine capable de gonfler est une colle de céréale.

7. Pâte à base de pommes de terre selon la revendication 6, **caractérisée en ce que** la farine constitue 10 à 20%, de préférence 12 à 18%, de manière particulièrement préférée 13 à 17% et la colle de 3 à 0,75%, de préférence 2,5 à 1,4%, de manière particulièrement préférée 2,1% du poids total.

8. Pâte à base de pommes de terre selon l'une des revendications 5 à 7, **caractérisée par** 45 à 55 ml, de préférence 50 ml de jaune d'oeuf liquide par kg de farine.

9. Pâte à base de pommes de terre selon l'une des revendications 5 à 8, **caractérisée en ce qu'**elle a été fabriquée en ajoutant une protéine capable de gonfler, en particulier une colle de céréale, de la farine ainsi que du jaune d'oeuf liquide d'une masse toute prête pour croquettes.

10. Pâte à base de pommes de terre selon la revendication 9, **caractérisée en ce que** la masse pour croquettes a été fabriquée en priorité à partir de 90 à 98% de pommes de terre, de préférence de 94 à 96% de pommes de terre, jusqu'à 5%, de préférence de 2 à 3% de flocons de pommes de terre et de produits auxiliaires, avec une part de matières sèches entre 31 et 35%, de préférence environ 33%.

11. Pâte à base de pommes de terre selon l'une des revendications 5 à 10, **caractérisée en ce que**, lors de sa fabrication, la protéine ajoutée à la pâte à base de pommes de terre est mélangée vigoureusement à la pâte à base de pommes de terre pendant moins de 120 secondes, de manière avantageuse entre 7 et 20 secondes, de préférence approximativement 10 secondes.

12. Procédé pour la fabrication et le travail de pâtes alimentaires à base de pommes de terre, en particulier de chaussons de pâte fourrée, pour lequel une pâte à base de pommes de terre est fabriquée à partir de pommes de terre et d'autres ingrédients, parmi lesquels il y a de la farine et éventuellement des ingrédients d'if, **caractérisé en ce qu'**une protéine capable de gonfler, de préférence une colle de céréale, est ajoutée à la pâte en plus de la partie de protéine capable de gonfler qui est éventuellement déjà contenue, la pâte est ensuite déroulée sur une machine pour dérouler la pâte à une épaisseur de 2 à 4 mm, de préférence de 2,5 à 3,5 mm, de manière particulièrement préférée à 3 mm et un gâteau de pâte (25) présentant une certaine forme est découpé ou découpé à l'emporte-pièce dans la couche de pâte (15).

13. Procédé selon la revendication 12, **caractérisé en ce que** la protéine ajoutée à la pâte à base de pommes de terre est mélangée vigoureusement à la pâte à base de pommes de terre pendant moins de 120 secondes, de préférence pendant 7 à 20 secondes, de préférence environ 10 secondes.
